# EUROPEAN PATENT SPECIFICATION

(11) **EP 0 708 603 B1**
(45) Date of publication and mention of the grant of the patent: **30.05.2001**
(21) Application number: 94923429.8
(22) Date of filing: 11.07.1994
(51) Int. Cl.: A23L 1/10, A21D 13/02

(54) **FOOD PRODUCTS WITH IMPROVED STRENGTH**
NAHRUNGSMITTEL MIT ERHOEHTER FESTIGKEIT
PRODUITS ALIMENTAIRES RENFORCES

(30) Priority: 09.07.1993 US 89727; 16.12.1993 US 168452
(43) Date of publication of application: 01.05.1996
(60) Divisional application: 00200311.9
(73) Proprietor: OPTA FOOD INGREDIENTS, INC., Bedford, MA 01730 (US)
(72) Inventor: GROSS, Akiva, Newton, MA 02167 (US); MORGAN, Robert, Carlisle, MA 01741 (US)
(74) Representative: Harvey, David Gareth
(86) International application number: US9407789
(87) International publication number: WO9501732

(56) References cited:
- EP-A- 0 117 044
- EP-A- 0 251 163
- EP-A- 0 251 375
- EP-A- 0 533 219
- BE-A- 855 215
- CH-A- 680 104
- DE-A- 3 614 465
- DE-A- 4 203 211
- FR-A- 2 477 844
- GB-A- 2 005 982
- US-A- 4 341 805
- US-A- 5 019 406
- PATENT ABSTRACTS OF JAPAN vol. 12, no. 242 (C-150) 8 July 1988 & JP,A,63 032 455 (NITTO SEIFUN KK) 12 February 1988

## Description

### Background

Food products derived from cereal grains such as wafers, (e.g. ice cream cones), crackers, cookies and cereals represent a fragile, crisp food system prone to breakage during manufacture, shipping and handling. This results in economic losses to the manufacturer and reduced product. It would greatly benefit the food industry to provide a means for improving the structural integrity of food products prone to breakage, without compromising the taste and sensory profile of the resultant food product.

US-A-5 019 406 discloses a farinaceous fiber-containing batter for producing a healthier, battered and fried food having reduced lipid retention and increased moisture content after frying. The fibrous additive is preferably present in the batter in an amount of 0.3-3.0% by weight of the batter, and the fiber has an average fiber length of 50-500*µ*m. It is said the fiber-containing batter is stronger than conventional frying batters, which allows the batter to more readily stay intact during and after frying.

According to the present invention, there is provided a manufactured food product derived from cereal grains which, in final manufactured form consists of a crisp article of food that is fragile and susceptible to breakage, said product being selected from the group consisting of: non-yeast leavened baked foods, snack foods and extruded foods such as crackers, cookies, cereal or tortillas and comprised of about 0.2% to 25% by weight insoluble fiber strands, said fiber strand shaving an average length of about 100 to 800 microns, and when present in the food product, the fiber strands improve the overall strength, reduce the number of fines and do not adversely affect sensory or textual properties of the food product compared to a food product which does not contain said fiber strands.

Also according to the present invention, there is provided a method of improving the structural integrity of a manufactured food product derived from cereal grains which, in final manufactured form consists of a crisp article of food that is fragile and susceptible to breakage, said product being selected from the group consisting of: non-yeast leavened baked foods, snack foods and extruded foods such as crackers, cookies, cereal or tortillas the method comprising adding to said product about 0.2% to 25% by weight long, insoluble fiber strands, said fiber strands having an average length of about 100 to 800 microns, and the fiber strands being effective to improve the overall strength, reduce the number of fines and not adversely affect sensory or textual properties of the food product, compared to an otherwise identical food product which does not contain said fiber strands.

According to another aspect, the invention provides an edible wafer for frozen desserts and refrigerated novelties which is prone to breakage comprised of about 0.2% to 25% by weight long, insoluble fiber strands said fiber strands having an average length of about 100 to 800 microns, and when present in the food product, the fiber strands improve the overall strength, reduce the number of fines and do not adversely affect sensory or textural properties of the food product compared to a food product which does not contain said fiber strands.

Also according to this aspect, the invention provides a method of improving the structural integrity of an edible wafer for frozen desserts and refrigerated novelties which is prone to breakage comprising addition of about 0.2% to about 25% by weight long, insoluble fiber strands to the wafer product, said fiber strands having an average length of about 100 to 800 microns, and when present in the wafer product the fiber strands improve the overall strength, reduce the number of fines and do not adversely affect sensory or textural properties of the wafer product compared to a wafer product which does not contain said fiber strands.

The present invention relates to food products derived from cereal grains, comprising a fiber with long, insoluble fiber strands which when present in the food product improves the overall strength of the product and its textural attributes compared to a food which does not contain said fiber. Foods that can be strengthened with the insoluble fibers include edible wafers for frozen desserts and refrigerated novelties (e.g. ice cream cones), and formulated foods which include extruded foods, baked foods, puffed foods and snack foods (e.g. crackers, cookies, cereals and tortillas). The fiber functions to strengthen the food product regardless of its final molded, extruded or puffed shape. As described herein, the fiber can be any fiber derived from a plant or microbial source which has a high content of insoluble dietary fiber. Only a small amount of fiber is required to strengthen the structural integrity of the final food product.

The food product of the present invention can be used in the food industry, such as the ice cream novelty industry, baked goods industry or snack food industry to strengthen the structural and textural integrity as well as the overall quality of the food product, compared to similar food products which do not contain the fiber.

### Brief Description of the Drawings

Figure 1 is a graphic illustration comparing the results for the storage modulus (G') and the loss modulus (G") for the strips from the control ice cream cones and the ice cream cones prepared with OPTA™ oat fiber 770.

Figure 2 is a graphic illustration comparing the break force required for the control ice cream cones and the ice cream cones prepared with OPTA™ oat fiber 770.

### Detailed Description of the Invention

The present invention is based on the discovery that incorporation of fiber into the matrix of a food product derived from cereal grains strengthens the structural integrity of the food product due to the large amorphous structure of the fiber particles. The addition of the fiber in the food product results in a food product with more rigidity and structural integrity. Consequently, breakage of the food products of the present invention occurs to a lesser extent than the food products currently available on the market. Foods that can be strengthened by incorporation of the fibers into their formulations are those which are fragile and are susceptible to breakage, in the absence of the fiber, during normal manufacturing and handling conditions. Preferred foods of the present invention are edible wafers for frozen desserts and refrigerated novelties (e.g., ice cream cones) and formulated food systems which include baked foods (e.g., cookies), snack foods (e.g., corn chips) and extruded foods, such as cereals (e.g., puffed, flaked or extruded) products. Normal breakage due to lack of structural integrity can be minimized in food supplies, other than yeast leavened products, such as Melba Toast, using the fibers as a means of reinforcing the food product.

Only a small amount of fiber is required to strengthen and reinforce some food products, such as edible wafers (e.g., ice cream cones). The amount necessary can be readily ascertained as being that amount which is suitable to strengthen but does not compromise sensory properties of the product. In instances in which a small amount of fiber is required, preferably the amount of fiber will be from 0.2 to 10% by weight, with from 1 to 2% being most preferred, to yield a product that is structurally superior to like product which does not contain the fiber. However, some food products, such as those prepared from wheat or corn meal extrudates (e.g. tortillas), require larger amounts of fiber to strengthen and reinforce the food product. In these instances, the preferred amount of fiber will be from 1 to 25% by weight, with from 2 to 10% being most preferred, to yield a product structurally superior to like product which does not contain the fiber. The strengthening amount of fiber may be slightly higher or lower than the preferred range depending upon the type of fiber used and the type of food product being strengthened, but determination of the strengthening amount would not require undue experimentation.

The uniqueness of the food product of the present invention is related to the presence of relatively long, insoluble fiber strands that reinforce the food product and enhance the firmness/crispness of the initial product. Generally, the long, insoluble fiber strands range from about 100 to 800 µm. In a particular embodiment, the length of the insoluble fiber strands used in the food product of the present invention is about 450 microns. In addition to length, the particle size of the insoluble fiber strands of the present invention is important. One method of determining the correct length and particle size of the fiber strands is by screen analysis using US Standard (USS) mesh screens. For example, the criteria for determining acceptable fiber length and size for the present invention using screen analysis is given below:

| USS mesh screen | % fiber through screen |
|---|---|
| 50 (course mesh) | 98 |
| 100 (medium mesh) | 85 |
| 200 (fine mesh) | 75 |

Mesh sizes 50, 100 and 200 have mesh opening sizes of 0.297 mm, 0.149 mm and 0.074 mm, respectively.
Thus, a fiber extracted from any source which meets these criteria can be used in the food product of the present invention. This method is a crude determination. Other techniques such as image analysis or microscopic examinations for fiber length can be used.

The fiber used in the food product of the present invention can be obtained from any plant source which has a high content of insoluble dietary fiber. Alternatively, fibers can be obtained from microbial sources such as fermentation products, for example, cellulose. Fiber is intended herein to mean a material which is predominately cellulose in nature. Examples of some preferred fibers are cellulose, hemicellulose and lignin. A high content of insoluble dietary fiber is described herein as greater than 75% of the fiber used in the food product of the present invention. The fiber can be obtained from sources such as, but not limited to, oat fiber, corn fiber, wheat fiber, sugar beet fiber, rice fiber and wood fiber. Certain sources of fiber such as soy fiber and pea fiber are not suitable for use in the present invention because the fiber lengths are too short, i.e., less than 100 µm, and cannot adequately strengthen the material. Techniques which would lengthen pea or soy fibers would render these fiber sources usable in the present invention.

A structurally reinforced food product can be made by admixing the fiber to traditional ingredients used to make the food products. As shown in Example 1, both sugar cone and wafer cone formulations can be used and require little if any changes in the ingredients and processing steps that are commercially in practice. Depending upon the formulation, it may be necessary to add more water to the fiber fortified recipe. A like amount of flour can be removed from the formulation to compensate for the addition of the fiber.

The food product of the present invention includes, but is not limited to, edible wafers for frozen desserts and refrigerated novelties, such as ice cream cones; formulated foods derived from grains which include baked foods, (e.g., crackers and cookies) snack foods, (e.g., corn chips) puffed foods (e.g., cereals) and extruded foods (e.g., tortillas). The food products of this invention are those which are derived from grains derived from wheat, oat, barley, rice and soy.

In one embodiment, as described in Example 1, the long insoluble fiber strands are added to an edible wafer mixture (e.g., sugar ice cream cone) which can be shaped in wafer form, cone form or tubular form. The long insoluble fiber strands of Example 1 are in the form of oat fiber as described in U.S. Patent No. 5,023,103, and is referred to herein as OPTA™ oat fiber 770. OPTA™ oat fiber 770 is a delignified, unbleached fiber product which is prepared by alkaline treatment of oat hulls under high temperature, followed by washing and grinding. The OPTA™ oat fiber 770 has a high dietary fiber content in excess of approximately 90%. In Example 1, the OPTA™ oat fiber 770 is added at 1-2% by weight of the total ingredients of a sugar ice cream cone mixture (oat fiber). As demonstrated in Example 1, the ingredient typically removed from the standard sugar ice cream cone mixture (control) is flour. However, other adjustments to the wafer mixture of the present invention may be necessary, such as addition of water to maintain the taste and sensory profile of the final product. Those skilled in the art will be able to determine other suitable wafer mixtures which contain the fibers of the present invention using no more than routine experimentation.

As demonstrated in Examples 2-4, the sugar ice cream cones containing the OPTA™ oat fiber 770 were sensorially harder and firmer than the control sugar ice cream cones (cones which did not contain the OPTA™ oat fiber 770) and showed greater resistance to breakage. Example 2 describes the sensory texture profile of the sugar cones containing the oat fiber versus the control sugar cones using a panel of five unskilled judges. The results demonstrate the superior hardness and firmness of the sugar cones containing the oat fiber as compared to the control cones. In addition, the experiments in Example 3 were conducted to measure the ability of each sugar cone (oat fiber sugar cone and control sugar cone) to regain its shape after compression (G') and the ability of each sugar cone to deform after compression (G"). In both instances, the sugar cones containing the oat fiber proved superior in their ability to regain their shape after compression and to deform after compression. Finally, Example 4 demonstrates the three point bending test which measures the force required to break the sugar cones. The break force for the control cones was 75 g, while the cones containing the oat fiber remained intact at a force of 100 g, which is the limit of the instrument.

In another embodiment, described in Example 5, the long, insoluble fiber strands are added to a snack cracker mixture in the form of oat fiber as described in U.S. Patent No. 5,023,103, and is referred to as OPTA™ oat fiber 780. OPTA™ oat fiber 780 is a delignified, bleached oat fiber. The OPTA™ oat fiber 780 has a high dietary fiber content in excess of 90% by weight and is produced using the same process for OPTA™ oat fiber 770, but hydrogen peroxide treatment is added after the alkaline treatment. In Example 5, two types of rotary cut snack crackers were prepared. Both mixtures contained 1-2% OPTA™ oat fiber 780, but one mixture contained 19% by weight water (A) of the total ingredients and the other mixture contained 21% by weight water (C) of the total ingredients. As demonstrated in Example 6, the relative strength of each snack cracker was superior to their respective control snack crackers (i.e., like snack crackers which did not contain the oat fiber) indicating that even in the presence of higher amounts of water, the addition of oat fiber to the product improves its overall strength. Other adjustments to the cracker mixture using the fibers of the present invention and resulting in structurally superior crackers, can be made by those skilled in the art using no more than routine experimentation.

In a further embodiment, described in Examples 7-9, extrudates containing wheat starch or corn meal with varying amounts of OPTA™ oat fiber 780 were prepared and tested for their relative strengths as compared to a like product which did not contain the fibers of the present invention. As shown in Example 8, the strength of the wheat starch extrudates containing 2-10% OPTA oat fiber were structurally superior to the controls. In addition, corn meal extrudates containing 2% OPTA™ oat fiber were structurally superior compared to a like product which did not contain the fibers of the present invention, as shown in Example 9.

Example 10 describes another embodiment which demonstrates the ability of OPTA™ oat fiber to reduce the fines or small particles in a flaked, ready to eat (RTE) cereal. In this embodiment, varying amounts of OPTA™ oat fiber were added to a bran flake mixture; the integrity of the flakes were tested and compared to a control (like bran flakes which did not contain the OPTA™ oat fiber). As shown in Example 10, as little as 1.7% by weight OPTA™ oat fiber in the bran flake mixture resulted in measurable decrease in fines (3%) and addition of 3.5% by weight OPTA™ oat fiber to the bran flake mixture resulted in a significant decrease in fines (29%).

In addition to the delignified unbleached OPTA™ oat fiber 770 and 780 described above, other forms of fiber extracted from a suitable source as described herein, such as non-delignified bleached fiber; non-delignified unbleached; unbleached, partially delignified fiber; bleached or unbleached delignified fiber, can be used in the wafers of the present invention.

Food products containing the fibers can enhance the shelf life and eating quality of the product. This invention will result in reduced breakage (hence product loss) of food products such as ice cream cones and cookies, during manufacture, packaging and shipment of the food product, thus resulting in the consumer receiving a superior product. In addition, the presence of fibers of the present invention allows for a greater water content in some food products while still maintaining a structurally superior product, thus reducing production costs.

The invention is further illustrated by the following examples, which are not intended to be limiting in any way.

### Example 1. Preparation of Ice Cream Cones Containing the OPTA™ Oat Fiber 770 and a Control

Sugar ice cream cones which contained the OPTA™ oat fiber 770 (Oat Fiber) and sugar ice cream cones (control) which did not contain the OPTA™ oat fiber 770 were prepared using the following formulation and procedure:

| Ingredient | Control Grams (%) | Oat Fiber Grams (%) |
|---|---|---|
| Soft flour | 100 (40.48) | 100 (39.88) |
| Granulated Sugar | 25 (10.12) | 25 (9.97) |
| All-purpose shortening | 1 (0.40) | 1 (0.40) |
| Opta oat fiber 770 | 0 | 3.7 (1.48) |
| Salt | 0.5 (0.20) | 0.5 (0.20) |
| Water | 120 (48.58) | 120 (47.87) |
| Flavor, color, potassium sorbate | 0.5 (0.20) | 0.5 (0.20) |

The specifications for the flour used are as follows: protein 9.5 - 10.5%; ash 0.41 - .44%; pH 4.7 - 4.85. Any equipment which can produce a smooth, lump-free batter is suitable. The dry ingredients were first blended then the water is added slowly and mixed for 15 minutes. The melted shortening was then blended followed by mixing for an additional minute. The batter was placed in the molds and was baked.

### Example 2. Sensory Texture Profiling of the Oat Fiber Recipe and the Control

Sensory texture profiles were obtained with a panel of five unskilled judges. The samples coded (1) Oat fiber recipe and (2) Control, were tested for hardness, firmness, crispness and crunchiness. The mean scores on a five-point scale are as below:

| Attribute | Sample 1 | Sample 2 |
|---|---|---|
| Hardness | 4.67 | 4.17 |
| Firmness | 5.0 | 4.2 |
| Crispness | 4.6 | 4.8 |
| Crunchiness | 4.6 | 4.6 |

As demonstrated above, the Oat fiber recipe was sensorially harder and firmer than the Control. A sample evaluation sheet used in this evaluation is presented below.

| TEST | METHOD | | GRADE |
|---|---|---|---|
| Hardness | a) Break off a piece with your fingers. | | Soft - Hard 1 2 3 4 5 |
| | b) Bite into the cone with your front teeth. | | |
| Firmness | Place between molars and compress completely. | | Low - High 1 2 3 4 5 |
| Crispness | Bite with front teeth and chew at least once between molars. | | Low - High 1 2 3 4 5 |
| Crunchiness | --as above-- | | Low - High 1 2 3 4 5 |

| SCORES: | | | |
|---|---|---|---|
| Sample 1 | | Sample 2 | |
| Hardness | | | |
| Firmness | | | |
| Crispness | | | |
| Crunchiness | | | |

### Example 3. Small Amplitude Oscillatory Measurements of the Oat Fiber Recipe and the Control

These experiments were conducted on the cones made with the oat fiber recipe and the control cones, described in Example 1, to measure the ability of the cones to regain their shape after compression (G') and the ability of the cones to deform after compression (G"). Sample strips of each type of cone were placed in a small amplitude oscillator which rotates the strips while applying a force upon the strips. The small amplitude oscillator measures the angle or distance moved by the strips in radian/second to determine G' and G".

Sample strips were prepared by steaming the cones, opening them out and cutting them to the required size of 41.8 x 8 x 2.2 mm. The strips were air dried at 50°C to the characteristic moisture content and then used for the small amplitude oscillatory measurements.

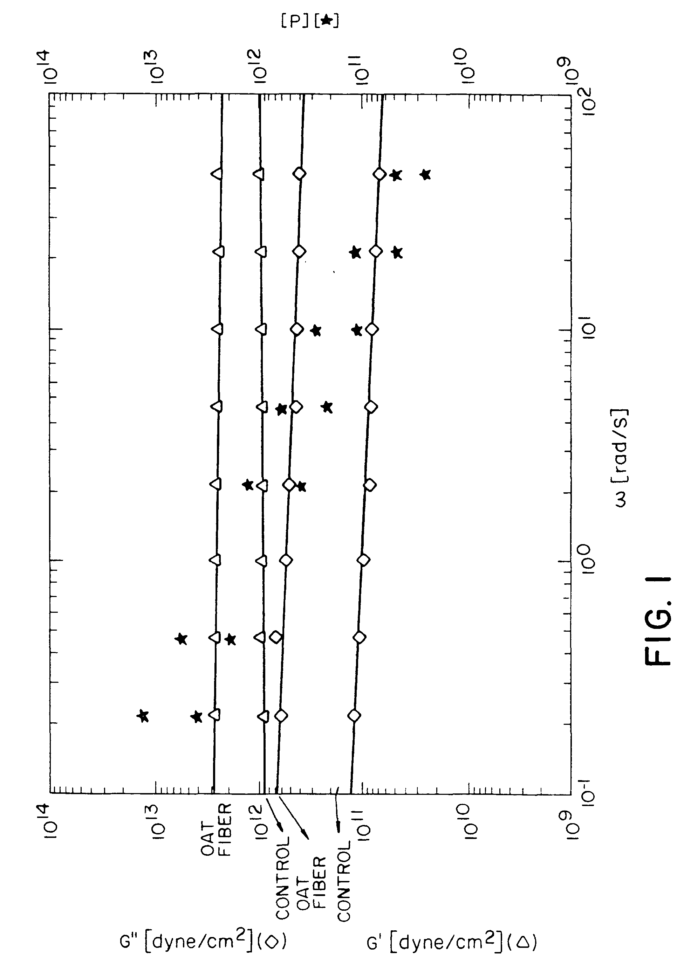

The small amplitude oscillatory measurements on each sample were in the range of 0.1 radian/second (rad./s) to 100 radian/second (rad./s) at a strain level of 0.1%. The strain level was selected based on the strain sweep data obtained at a frequency of 6.28 rad./s. Figure 1 gives the results for the storage modulus G' (the ability of the material to regain its shape after compression) and the loss modulus G" (the ability of the material to deform after compression) for the strips from the control cones and the cones prepared with OPTA™ oat fiber 770. The values obtained for the strips containing the oat fiber are higher than those of the controls, thus indicating the ability of the material to regain its shape after compression and the ability of the material to deform after compression is greater in the strips containing the oat fiber.

### Example 4. Three Point Bending Test of the Oat Fiber Recipe and the Control

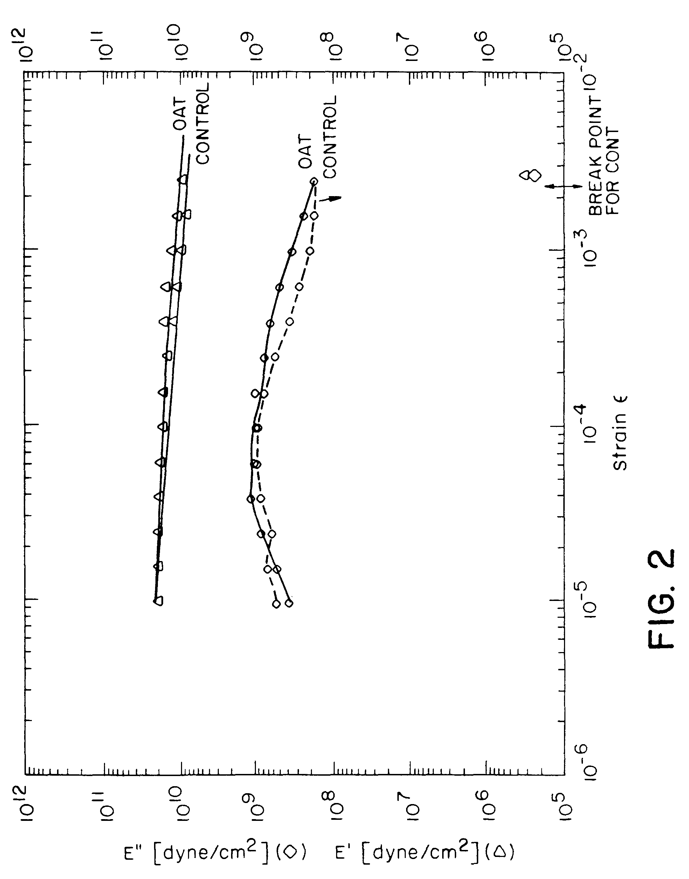

The measurements were conducted on a Rheometrics Solids Analyzer-II (RSA-II). The strips used were prepared as described in Example 3. The only difference was the dimension of strips which were 50 x 9 x 2.2 mm. The small amplitude strain sweeps were conducted in the range of 0.00001% to 0.01% at 6.28 rad./s. The results are plotted in Figure 2. The break force for the control strip is 75 g while the oat fiber containing strip remained intact to 100 g which is the limit of the instrument. The results indicate that the cones prepared with the oat fiber show greater resistance to breakage.

### Example 5. Preparation of a cracker Containing OPTA™ Oat Fiber 780

The following formulation and procedure was used to prepare two types of rotary cut snack crackers containing OPTA™ oat fiber 780 (Oat fiber). Both mixtures contained 1-2% OPTA™ oat fiber 780, but one mixture contained 19% by weight water (A) of the total ingredients and the other mixture contained 21% by weight water (C) of the total ingredients. In addition, control snack crackers were prepared for snack crackers A and C, (B and D, respectively) which contained equivalent amounts of water but did not contain OPTA™ oat fiber 780.

| Ingredient | A Oat Fiber (grams) | B Control (grams) | C Oat Fiber (grams) | D Water (grams) |
|---|---|---|---|---|
| Flour (Cookie) | 75.00 | 75.00 | 75.00 | 75.00 |
| Water | 29.66 | 29.66 | 33.66 | 33.66 |
| Whole Wheat Flour | 25.00 | 25.00 | 25.00 | 25.00 |
| Sugar | 6.60 | 6.60 | 6.60 | 6.60 |
| Shortening | 6.00 | 6.00 | 6.00 | 6.00 |
| Non Fat Dry Milk | 4.40 | 4.40 | 4.40 | 4.40 |
| Ammonium Bicarbonate | 3.30 | 3.30 | 3.30 | 3.30 |
| Corn Starch | 2.16 | 2.16 | 2.16 | 2.16 |
| OPTA OAT FIBER™ #780 | 2.00 | - | 2.00 | - |
| Malt, Non-diastatic | 2.00 | 2.00 | 2.00 | 2.00 |
| Salt | 1.00 | 1.00 | 1.00 | 1.00 |
| Sodium Bicarbonate | 0.66 | 0.66 | 0.66 | 0.66 |
| Sodium Bisulfite | 0.02 | 0.02 | 0.02 | 0.02 |
| Sodium Sulfite | 0.075 | 0.075 | 0.075 | 0.075 |
| | | | | |
| Finished Moisture (%) | 2.6 | 2.6 | 2.6 | 2.9 |

The ammonium bicarbonate and sodium sulfite were dissolved in water. The rest of the ingredients were added and then mixed in a Hobart mixer with a 37.8l (40 quart) bowl and paddle agitator for 10 minute on low speed. Each dough was passed through a three roll dough sheeter and two sets of reducing rolls to a dough thickness of approximately 2 mm. The dough sheet was docked and cut into round pieces using a two roll docking and cutting system. The crackers were then baked in a 9.14 m (30 foot) indirect fired traveling band on a heavy duty Ashworth mesh band. The baking time was 6 minutes at an average baking temperature of 238°C (460°F). The % finished moisture of the final products were as reported above.

### Example 6. Three point bending test of the crackers

These test were conducted on the crackers made with the oat fiber recipe and the control crackers, described in Example 5. The force required to break a cracker was measured on a TA.XT2 Texture Analyzer using the three point bending test. The crackers were placed on 2 supports placed 3.2 cm apart. The probe (0.3 x 7 cm) was centered above the supports and lowered at a speed of 5 mm/sec through the cracker until the cracker broke. The maximum force during the fracture was recorded as the strength of the cracker. The results, tabulated below show the relative strengths of each type of cracker compared to its control cracker. The data indicates that in the presence of varying amounts of water, the addition of the oat fiber yields a product that is structurally superior to like product which does not contain the fiber.

| Formulation # | | | | |
|---|---|---|---|---|
| | A | B | C | D |
| Relative Strength (3 point bending) | 1.20 | 1.00 | 1.06 | 0.89 |

### Example 7. Preparation of an extrudate containing OPTA™ oat fiber

Extrudates containing wheat starch or corn meal and varying amounts of OPTA™ oat fiber 780 were prepared on a Wenger TX-52 single screw extruder. The feed rate of the product into the extruder was 0.95 m/min (2.1 lb/min) with a shaft speed of 315 rpm. Water was added into the extruder at a rate of 0.23 kg/min (0.5 lb/min). The time of the addition of the water was varied. The temperature of the barrel jackets is as indicated below:

| Barrel Jacket | Temperature °C |
|---|---|
| 2nd head | 30 |
| 3rd head | 30 |
| 4th head | 50 |
| 5th head | 90 |
| 6th head | 90 |

The product was extruded through a die with 3 openings of 4.8mm (3/6") diameter and 15 degree taper at a pressure of 51.7 bar (750 psi).

### Example 8. Measurement of strength of wheat starch extrudates containing OPTA Oat fiber

The wheat starch extrudates containing varying amounts of OPTA™ oat fiber 780 were prepared as described in Example 7. The strength of the extrudates were measured on a TA.XT2 texture analyzer. The diameter change and amount of force required to break the extrudates are tabulated below:

| OPTA Oat Fiber (%) | Moisture (%) | Bulk Density (g/l) | Diameter (cm) (Change %) | Peak Force (kg) (Change %) |
|---|---|---|---|---|
| 0 | 8.9 | 217 | 9.23 | 4.80 (0) |
| 1 | 7.5 | 210 | 9.22 (-0.1) | 4.97 (3.5) |
| 2 | 7.3 | 219 | 8.93 (-3.3) | 6.41 (33.5) |
| 4 | 6.9 | 200 | 8.25 (-10.6) | 5.93 (12.3) |
| 10 | 6.2 | 178 | 7.75 (-16.0) | 6.59 (37.3) |

### Example 9. Measurement of strength of corn meal extrudates containing OPTA Oat fiber

The corn meal extrudates containing varying amounts of OPTA™ oat fiber 780 were prepared as described in Example 7. The strength of the extrudates were measured on a TA.XT2 texture analyzer. The diameter change and amount of force required to break the extrudates are tabulated below:

| OPTA Oat Fiber (%) | Moisture (%) | Bulk Density (g/l) | Diameter (cm) (Change %) | Peak Force (kg) (Change %) |
|---|---|---|---|---|
| 0 | 4.8 | 93 | 12.26 (0) | 1.42 (0) |
| 2 | 4.5 | 86 | 11.74 (-4.2) | 1.79 (26.1) |

### Example 10. Flake Integrity Test

The ability of Opta™ Oat Fiber to reduce the fines in a flaked RTE cereal was tested in bran flakes produced at Wenger Manufacturing, Inc.

The fines were measured by placing 100 g of the flaked cereal on a 35 mesh screen (having a mesh opening size of 0.5 mm) with four 2.54 cm (1 inch) ceramic balls. The flakes and the balls were shaken for 10 minutes and the weight of flakes remaining on the screen was determined. The fines were calculated by difference.

| Ingredient | + Opta™ Oat Fiber | | |
|---|---|---|---|
| | Control (% or g) | A (% or g) | B (% or g) |
| Whole Wheat Flour | 50.58 | 48.88 | 47.18 |
| Heavy Bran | 34.00 | 34.00 | 34.00 |
| Sugar | 7.12 | 7.12 | 7.12 |
| Water | 4.27 | 4.27 | 4.27 |
| Barley Malt Extract | 2.18 | 2.18 | 2.18 |
| Salt | 1.43 | 1.43 | 1.43 |
| Caramel Color | 0.42 | 0.42 | 0.42 |
| OPTA™ Oat Fiber #780 | - | 1.70 | 3.40 |
| Total | 100.00 | 100.00 | 100.00 |
| Finished Moisture (%) | 2.9 | 3.0 | 3.4 |
| Fines (%) | 7.3 | 7.1 | 5.2 |
| % Decrease in fines | | 3.0 | 29 |

## Claims

1. A manufactured food product derived from cereal grains which, in final manufactured form consists of a crisp article of food that is fragile and susceptible to breakage, said product being selected from the group consisting of: non-yeast leavened baked foods, snack foods and extruded foods such as crackers, cookies, cereal or tortillas and comprised of about 0.2% to 25% by weight insoluble fiber strands, said fiber strands having an average length of about 100 to 800 microns, and when present in the food product, the fiber strands improve the overall strength, reduce the number of fines and do not adversely affect sensory or textual properties of the food product compared to a food product which does not contain said fiber strands.

2. A food product according to claim 1, wherein the fiber strands are derived from a plant or microbial source.

3. A food product according to claim 1, wherein the fiber is selected from the group consisting of: oat fiber, corn fiber, wheat fiber, sugar beet fiber, rice fiber and wood fiber, and is preferably oat fiber.

4. A method of improving the structural integrity of a manufactured food product derived from cereal grains which, in final manufactured form consists of a crisp article of food that is fragile and susceptible to breakage, said product being selected from the group consisting of: non-yeast leavened baked foods, snack foods and extruded foods such as crackers, cookies, cereal or tortillas the method comprising adding to said product about 0.2% to 25% by weight long, insoluble fiber strands, said fiber strands having an average length of about 100 to 800 microns, and the fiber strands being effective to improve the overall strength, reduce the number of fines and not adversely affect sensory or textual properties of the food product, compared to an otherwise identical food product which does not contain said fiber strands.

5. A method according to claim 4, wherein the fiber strands are derived from a plant or microbial source.

6. A method of claim 4, wherein the fiber is selected from the group consisting of: oat fiber, corn fiber, wheat fiber, sugar beet fiber, rice fiber and wood fiber, and is preferably oat fiber.

7. An edible wafer for frozen desserts and refrigerated novelties which is prone to breakage comprised of about 0.2% to 25% by weight long, insoluble fiber strands said fiber strands having an average length of about 100 to 800 microns, and when present in the food product, the fiber strands improve the overall strength, reduce the number of fines and do not adversely affect sensory or textural properties of the food product compared to a food product which does not contain said fiber strands.

8. An edible wafer according to claim 7, wherein said fiber strands are derived from a plant or microbial source.

9. An edible wafer material of claim 7, wherein the fiber is selected from the group consisting of: oat fiber, corn fiber, wheat fiber, sugar beet fiber, rice fiber and wood fiber, and is preferably oat fiber.

10. An edible wafer of claim 9, wherein the edible wafer is shaped in wafer form, cone form or tubular form.

11. A method of improving the structural integrity of an edible wafer for frozen desserts and refrigerated novelties which is prone to breakage comprising addition of about 0.2% to about 25% by weight long, insoluble fiber strands to the wafer product, said fiber strands having an average length of about 100 to 800 microns, and when present in the wafer product the fiber strands improve the overall strength, reduce the number of fines and do not adversely affect sensory or textural properties of the wafer product compared to a wafer product which does not contain said fiber strands.

12. A method of claim 7, wherein the fiber is selected from the group consisting of: oat fiber, corn fiber, wheat fiber, sugar beet fiber, rice fiber and wood fiber, and is preferably oat fiber.

13. A method of claim 7, wherein the edible wafer is shaped in wafer form, cone form or tubular form.

14. A method of claim 7, wherein the fiber strands are derived from a plant or microbial source.

## Patentansprüche

1. Lebensmittelprodukt hergestellt aus Getreidekörnern, das in der fertigen Endform aus einem knusprigen Lebensmittelartikel besteht, der fragil und leicht zerbrechlich ist, wobei das Produkt aus der Gruppe, bestehend aus nicht mit Hefe getriebenen Backwaren, Snacks und extrudierten Lebensmitteln, wie Cracker, Plätzchen, Zerealien oder Maiskuchen, ausgewählt ist und aus etwa 0,2 bis 25 Gew.-% unlöslichen Fasersträngen besteht, wobei die Faserstränge eine mittlere Länge von etwa 100 bis 800 micron aufweisen, und die Faserstränge, wenn sie in dem Lebensmittelprodukt vorhanden sind, im Vergleich zu einem Lebensmittelprodukt, das die Faserstränge nicht enthält, die Gesamtfestigkeit verbessern, die Anzahl an Feinteilchen herabsetzen und die sensorischen und texturellen Eigenschaften des Lebensmittelproduktes nicht beeinträchtigen.

2. Lebensmittelprodukt nach Anspruch 1, wobei die Faserstränge pflanzlichen oder mikrobiellen Ursprungs sind.

3. Lebensmittelprodukt nach Anspruch 1, wobei die Faser aus der Gruppe, bestehend aus Haferfaser, Maisfaser, Weizenfaser, Zuckerrübenfaser, Reisfaser und Holzfaser, ausgewählt ist und vorzugsweise Haferfaser ist.

4. Verfahren zur Verbesserung der Strukturintegrität eines Lebensmittelproduktes hergestellt aus Getreidekörnern, das in der fertigen Endform aus einem knusprigen Lebensmittelartikel besteht, der fragil und leicht zerbrechlich ist, wobei das Produkt aus der Gruppe, bestehend aus nicht mit Hefe getriebenen Backwaren, Snacks und extrudierten Lebensmitteln, wie Cracker, Plätzchen, Zerealien oder Maiskuchen, ausgewählt ist, wobei das Verfahren die Zugabe von etwa 0,2 bis 25 Gew.-% langen, unlöslichen Fasersträngen umfaßt, wobei die Faserstränge eine mittlere Länge von etwa 100 bis 800 micron aufweisen und im Vergleich zu einem anderweitig identischen Lebensmittelprodukt, das die Faserstränge nicht enthält, zur Verbesserung der Gesamtfestigkeit, Verminderung der Anzahl an Feinteilchen wirksam sind und die sensorischen und texturellen Eigenschaften des Lebensmittelproduktes nicht beeinträchtigen.

5. Verfahren nach Anspruch 4, wobei die Faserstränge pflanzlichen oder mikrobiellen Ursprungs sind.

6. Verfahren nach Anspruch 4, wobei die Faser aus der Gruppe, bestehend aus Haferfaser, Maisfaser, Weizenfaser, Zuckerrübenfaser, Reisfaser und Holzfaser, ausgewählt ist und vorzugsweise Haferfaser ist.

7. Eßbare Waffel für gefrorene Desserts und neuarige Tiefkühl-Produkte, die leicht bricht und aus etwa 0,2 bis 25 Gew.-% langen, unlöslichen Fasersträngen besteht, wobei die Faserstränge eine mittlere Länge von etwa 100 bis 800 micron aufweisen, und die Faserstränge, wenn sie in dem Lebensmittelprodukt vorhanden sind, im Vergleich zu einem Lebensmittelprodukt, das die Faserstränge nicht enthält, die Gesamtfestigkeit verbessern, die Anzahl an Feinteilchen herabsetzen und die sensorischen und texturellen Eigenschaften des Lebensmittelproduktes nicht beeinträchtigen.

8. Eßbare Waffel nach Anspruch 7, wobei die Faserstränge pflanzlichen oder mikrobiellen Ursprungs sind.

9. Eßbares Waffelmaterial nach Anspruch 7, wobei die Faser aus der Gruppe, bestehend aus Haferfaser, Maisfaser, Weizenfaser, Zuckerrübenfaser, Reisfaser und Holzfaser, ausgewählt ist und vorzugsweise Haferfaser ist.

10. Eßbare Waffel nach Anspruch 9, wobei die eßbare Waffel waffelförmig, kegelförmig oder röhrenförmig geformt ist.

11. Verfahren zur Verbesserung der Strukturintegrität einer eßbaren Waffel für gefrorene Desserts und neuartige Tiefkühl-Produkte, die leicht bricht, umfassend die Zugabe von etwa 0,2 bis 25 Gew.-% langen, unlöslichen Fasersträngen, wobei die Faserstränge eine mittlere Länge von etwa 100 bis 800 micron aufweisen, und die Faserstränge, wenn sie in dem Lebensmittelprodukt vorhanden sind, im Vergleich zu einem Lebensmittelprodukt, das die Faserstränge nicht enthält, die Gesamtfestigkeit verbessern, die Anzahl an Feinteilchen herabsetzen und die sensorischen und texturellen Eigenschaften des Lebensmittelproduktes nicht beeinträchtigen.

12. Verfahren nach Anspruch 7, wobei die Faser aus der Gruppe, bestehend aus Haferfaser, Maisfaser, Weizenfaser, Zuckerrübenfaser, Reisfaser und Holzfaser, ausgewählt ist und vorzugsweise Haferfaser ist.

13. Verfahren nach Anspruch 7, wobei die eßbare Waffel waffelförmig, kegelförmig oder röhrenförmig geformt ist.

14. Verfahren nach Anspruch 7, wobei die Faserstränge pflanzlichen oder mikrobiellen Ursprungs sind.

## Revendications

1. Produit alimentaire fabriqué dérivé de graines de céréales, qui, dans sa forme finale fabriquée, constitue un produit alimentaire croustillant, qui est fragile et susceptible de se casser, ledit produit étant choisi dans le groupe comprenant : des aliments cuits acidifiés sans levure, des produits formant casse-croûte et des produits extrudés tels que des biscuits secs, des petits gâteaux, des céréales ou des tortillas et comprenant environ 0,2 % à 25 % en poids de filaments formés de fibres insolubles, lesdits filaments formés de fibres possédant une longueur moyenne comprise entre environ 100 et 800 micromètres, les filaments formés de fibres lorsqu'ils sont présents dans le produit alimentaire, améliorant la solidité globale, réduisant le nombre de miettes et n'affectant pas de façon nuisible les caractéristiques de toucher ou texture du produit alimentaire par rapport à un produit alimentaire qui ne contient pas de tels filaments formés de fibres.

2. Produit alimentaire selon la revendication 1, dans lequel les filaments formés de fibres sont tirés d'une plante ou d'une source microbienne.

3. Produit alimentaire selon la revendication 1, dans lequel la fibre est choisie dans le groupe comprenant : la fibre d'avoine, la fibre de maïs, la fibre de blé, la fibre de betterave sucrière, la fibre de riz et la fibre de bois et est de préférence la fibre d'avoine.

4. Procédé pour améliorer l'intégrité structurelle d'un produit alimentaire fabriqué, dérivé de graines de céréales, qui, dans sa forme finale fabriquée, constitue un produit alimentaire croustillant, qui est fragile et susceptible de se casser, ledit produit étant choisi dans le groupe comprenant : des aliments cuits acidifiés sans levure, des produits formant casse-croûte et des produits extrudés tels que des biscuits secs, des petits gâteaux, des céréales ou des tortillas, le procédé comprenant l'addition, audit produit, d'environ 0,2 % à 25 % en poids de longs filaments formés de fibres insolubles, lesdits filaments formés de fibres possédant une longueur moyenne comprise entre environ 100 et 800 micromètres, et les filaments formés de fibres étant efficaces pour améliorer la solidité globale, réduisant le nombre de miettes et n'affectent pas de façon nuisible les caractéristiques de toucher ou texture du produit alimentaire par rapport à un produit alimentaire qui ne contient pas de tels filaments formés de fibres.

5. Procédé selon la revendication 4, selon lequel les filaments formés de fibres sont tirés d'une plante ou d'une source microbienne.

6. Procédé selon la revendication 4, selon lequel la fibre est choisie dans le groupe comprenant : la fibre d'avoine, la fibre de maïs, la fibre de blé, la fibre de betterave sucrière, la fibre de riz et la fibre de bois et est de préférence la fibre d'avoine.

7. Gaufrette comestible pour desserts congelés et pour produits nouveaux réfrigérés, qui est susceptible de se casser, constituée de filaments formés de fibres insolubles, possédant une longueur comprise entre 0,2 % et 25 % en poids, lesdits filaments formés de fibres possédant une longueur moyenne comprise entre environ 100 et 800 micromètres, les filaments formés de fibres, lorsqu'ils sont présents dans le produit alimentaire, améliorant la solidité globale, réduisant le nombre de miettes et n'affectant pas de façon nuisible les caractéristiques de toucher ou texture du produit alimentaire par rapport à un produit alimentaire qui ne contient pas de tels filaments formés de fibres.

8. Gaufrette comestible selon la revendication 7, dans laquelle les filaments formés de fibres sont tirés d'une plante ou d'une source microbienne.

9. Matière pour gaufrette comestible selon la revendication 7, dans laquelle la fibre est choisie dans le groupe comprenant : la fibre d'avoine, la fibre de maïs, la fibre de blé, la fibre de betterave sucrière, la fibre de riz et la fibre de bois et est de préférence la fibre d'avoine.

10. Gaufrette comestible selon la revendication 9, dans laquelle la gaufrette comestible est réalisée sous la forme d'une gaufrette, sous la forme d'un cône ou sous une forme tubulaire.

11. Procédé pour améliorer l'intégrité structurelle d'une gaufrette comestible pour des desserts congelés et des produits nouveaux réfrigérés, qui est susceptible de se casser, comprenant l'addition d'environ 0,2 % à environ 25 % en poids de filaments formés de fibres insolubles, lesdits filaments formés de fibres possédant une longueur moyenne comprise entre environ 100 et 800 micromètres, les filaments formés de fibres, lorsqu'ils sont présents dans le produit alimentaire, améliorant la solidité globale, réduisant le nombre de miettes et n'affectant pas de façon nuisible les caractéristiques de toucher ou texture du produit alimentaire par rapport à un produit alimentaire qui ne contient pas de tels filaments formés de fibres.

12. Procédé selon la revendication 7, selon lequel la fibre est choisie dans le groupe comprenant : la fibre d'avoine, la fibre de maïs, la fibre de blé, la fibre de betterave sucrière, la fibre de riz et la fibre de bois et est de préférence la fibre d'avoine.

13. Procédé selon la revendication 7, selon lequel la gaufrette comestible possède la forme d'une gaufrette, la forme d'un cône ou une forme tubulaire.

14. Procédé selon la revendication 7, selon lequel les filaments formés de fibres sont dérivés d'une plante ou d'une source microbienne.
